**Europäisches Patentamt**

**European Patent Office**

**Office européen des brevets**

(19)

(11) Veröffentlichungsnummer : **0 355 455 B1**

(12) # EUROPÄISCHE PATENTSCHRIFT

(45) Veröffentlichungstag der Patentschrift :
**23.09.92 Patentblatt 92/39**

(51) Int. Cl.⁵ : **B23Q 3/155, B23Q 3/157**

(21) Anmeldenummer : **89113817.4**

(22) Anmeldetag : **27.07.89**

(54) **Werkzeugspeicher für Werkzeugmaschinen.**

(30) Priorität : **24.08.88 CH 3151/88**

(43) Veröffentlichungstag der Anmeldung :
**28.02.90 Patentblatt 90/09**

(45) Bekanntmachung des Hinweises auf die
Patenterteilung :
**23.09.92 Patentblatt 92/39**

(84) Benannte Vertragsstaaten :
**AT BE CH DE ES FR GB GR IT LI LU NL SE**

(56) Entgegenhaltungen :
**EP-A- 0 144 912**
**EP-A- 0 224 714**
**EP-A- 0 266 646**
**EP-A- 0 310 953**
**DE-A- 1 556 626**
**FR-A- 2 105 259**
**GB-A- 2 157 996**
**US-A- 2 475 450**

(56) Entgegenhaltungen :
**SOVIET INVENTIONS ILLUSTRATED, Woche
8646, 27. November 1986, Section General/Me-
chanical, Zusammenfassung Nr. 86-
303716/46,Derwent Publications Ltd, London,
GB; & SU-A-1 219 312 (KHABAROVSK POLY)
23-03-1986**
**PATENT ABSTRACTS OF JAPAN, Band 10, Nr.
326 (M-532)[2382], 6. November 1986, page 31
M 532; & JP-A-61 131 845 (MITSUBISHIELEC-
TRIC CORP.) 19-06-1986**

(73) Patentinhaber : **Starrfräsmaschinen AG**
**Seebleichestrasse 61**
**CH-9400 Rorschacherberg (CH)**

(72) Erfinder : **Novak, Peter**
**Oberstrasse 16**
**CH-8274 Tägerwilen (CH)**

(74) Vertreter : **EGLI-EUROPEAN PATENT
ATTORNEYS**
**Horneggstrasse 4**
**CH-8008 Zürich (CH)**

## Beschreibung

Die Erfindung betrifft einen Werkzeugspeicher für Werkzeugmaschinen, insbesondere für programmierbare Werkzeugmaschinen zum Speichern, zur Entnahme und zur Rückgabe sowie zum Bereitstellen von Werkzeugen, in welchem die Werkzeuge einzeln und/oder gruppenweise mit senkrecht zur Speicheroberfläche ausgerichteten Werkzeuglängsachsen angeordnet sind, wobei die Werkzeuge durch eine Vorlegeeinheit greifbar sind und an einer Uebergabestelle von einem Werkzeug-Handhabungsgerät übernommen oder von diesem zurückgegeben werden.

Werkzeugspeicher werden in grossem Umfang bei vielen Werkzeugmaschinen, insbesondere für die numerisch gesteuerte Bearbeitung von Werkstücken, z.B. in Bearbeitungszentren, eingesetzt. Für diese besteht ein wesentliches Problem darin, dass genügend Werkzeuge in nicht allzugrosser Entfernung bereitgestellt, an die Werkzeugmaschine übergeben und von dieser wieder zurückgenommen werden können.

Durch die EP-A-266 646 der Anmelderin ist ein Werkzeugspeicher für Werkzeugmaschinen der eingangs gennanten Art und ein Verfahren zum Betrieb desselben bekannt, bei welchem auf einer Säule ein Rotor drehbar gelagert ist. Der Rotor trägt zwei Laufbahnen, auf denen mit Werkzeugen bestückte Werkzeugmagazine verfahrbar gelagert sind. Zur Bereitstellung eines Werkzeuges oder von Werkzeugen - bei Mehrspindelmaschinen - wird das Werkzeugmagazin mit dem gewünschten Werkzeug mit dem Rotor gekuppelt und zu einer Belade- und Entladestation bewegt. Dort wird das Werkzeugmagazin vom Rotor abgekuppelt und von einer Greiferstation übernommen und fixiert, so dass mit einem Werkzeughandhabungsgerät das gewünschte Werkzeug entnommen und an die Werkzeugmaschine übergeben werden kann. Mit diesem Werkzeugspeicher wird erreicht, dass die Plätze für die einzelnen Werkzeuge sehr dicht aneinander angeordnet werden können, wobei allerdings ein magazinfreier Sektor unbelegt bleibt. Dieser Speicher kann zwar sowohl bei Einspindelals auch bei Mehrspindel-Werkzeugmaschinen vorteilhaft eingesetzt werden, jedoch ist er in seiner Arbeitsweise mehr auf die Anwendung auf Mehrspindel-Werkzeugmaschinen ausgerichtet.

Bei einem weiteren Werkzeugspeicher der Anmelderin nach EP-A-0 310 953 (Stand der Technik nach Artikel 54(3) EPÜ) werden die Werkzeuge in dichter, lückenloser Anordnung am gesamten Umfang eines zylinderförmigen Rotors abgestützt, so dass keine direkte Zugriffsmöglichkeit für einen Werkzeugwechsler besteht. Sind die Werkzeuge in Werkzeugmagazinen auf dem Rotor untergebracht, wird das gewünschte Werkzeugmagazin auf dem Rotor zu einer Vorschubeinheit bewegt. Dort übernimmt die Vorschubeinheit das betreffende Werkzeugmagazin und schiebt es über die Länge der Werkzeuge der benachbarten Werkzeugmagazine vor. Mit einem Werkzeugwechsler kann nun das gewünschte Werkzeug ergriffen und an die Einsatzstelle gebracht werden. Sollen nur Einzelwerkzeuge dem Magazin entommen werden, wird eine Werkzeugvorlegeeinheit in Form eines im Innern des zylinderförmigen Rotors gelagerten Verschiebearms mit einem Werkzeuggreifer vorgesehen. Diese Vorlegeeinheit greift das gewünschte Werkzeug und verschiebt es in radialer Richtung über die Länge der benachbarten Werkzeuge vor, so dass es vom Werkzeugwechsler übernommen werden kann. Durch die lückenlose Anordnung der Werkzeuge wird die Speicherkapazität dieses Werkzeugspeichers gegenüber dem erstgenannten Werkzeugspeicher vergrössert. Jedes Werkzeug kann durch die im Innern des zylindrischen Rotors angeordneten Vorlegeeinheit vorgelegt werden, da der Rotor neben seiner Drehbewegung auch eine Hubbewegung ausführen kann. Da durch die Vorlegeeinheit jeweils nur ein Werkzeug vorgelegt werden kann, eignet sich diese Ausführung besser zum Einsatz bei Einspindel-Werkzeugmaschinen als die Ausführung mit der Vorschubeinheit, mit welcher ein ganzes Werkzeugmagazin vorgelegt werden kann.

Wenn auch bei diesen bekannten Werkzeugspeichern die Zugriffszeit zum Auswechseln eines Werkzeuges in der Werkzeugspindel verhältnismässig kurz ist, ist doch nicht zu übersehen, dass zwischen dem Werkzeugspeicher und der Spindel ein bestimmter Abstand nicht unterschritten werden kann.

Hier setzt die Erfindung ein, deren Aufgabe es ist, einen Werkzeugspeicher der eingangs erwähnten Art so weiter auszugestalten, dass unter Beibehaltung einer grossen Speicherkapazität die Zugriffszeit für das Wechseln eines Werkzeuges an der Werkzeugspindel weiter verringert wird.

Diese Aufgabe wird gemäss der Erfindung bei einem Werkzeugspeicher der eingangs genannten Art dadurch gelöst, dass an einem Ständer ein mit Werkzeug-Aufnahmen versehener Werkzeugträger in Form einer kugelkalottenförmigen Schale gelagert ist, welcher von einem im Ständer gelagerten Motor angetrieben und um eine den Mittelpunkt der kugelkalottenförmigen Schale schneidende horizontale Achse rotierbar ist, wobei die Vorlegeeinheit im Innern der kugelkalottenförmigen Schale angeordnet ist.

Ausführungsbeispiele der Erfindung sind in der Zeichnung dargestellt und nachfolgend beschrieben. Es zeigen:

Fig. 1 eine Werkzeugmaschine mit einer horizontal gelagerten Arbeitsspindel und einem Werkzeugspeicher in räumlicher Darstellung,

Fig. 2 einen Vertikalschnitt des in Fig. 1 an der Seite der Werkzeugmaschine angeordneten Werkzeugspeichers,

Fig. 3 eine Ausführungsform des Werkzeugträgers des Speichers nach Fig. 2 in räumlicher Darstellung,

Fig. 4 eine Draufsicht der Werkzeugmaschine und des Speichers nach Fig. 1,

Fig. 5 eine Seitenansicht eines Werkzeug-Doppelgreifers eines an dem Werkzeugträger des Werkzeugspeichers nach Fig. 4 angeordneten Werkzeugwechslers,

Fig. 6 einen Schnitt des Werkzeug-Doppelgreifers längs der Linie VI - VI in Fig. 5,

Fig. 7a eine Draufsicht des Werkzeugspeichers nach Fig. 4 mit einer im Werkzeugträger angeordneten Werkzeugkonus-Reinigungsstation, wobei der Werkzeugwechsler seine Warteposition einnimmt,

Fig. 7b dieselbe Draufsicht des Werkzeugspeichers wie in Fig. 7a, wobei jedoch der Werkzeugwechsler sich in der Werkzeugwechselpostition an der Werkzeugmaschine befindet,

Fig. 8 einen Vertikalschnitt einer zweiten Ausführungsform des Werkzeugspeichers für eine Werkzeugmaschine,

Fig. 9 einen schematisch dargestellten Ständer des Speichers nach Fig. 8 in räumlicher Darstellung,

Fig. 10 die Anordnung des Werkzeugspeichers nach Fig. 8 an einer Werkzeugmaschine und

Fig. 11 den Werkzeugspeicher nach Fig. 8 mit um diesen angeordnete Einzelwerkzeugaufnahmen in räumlicher Darstellung.

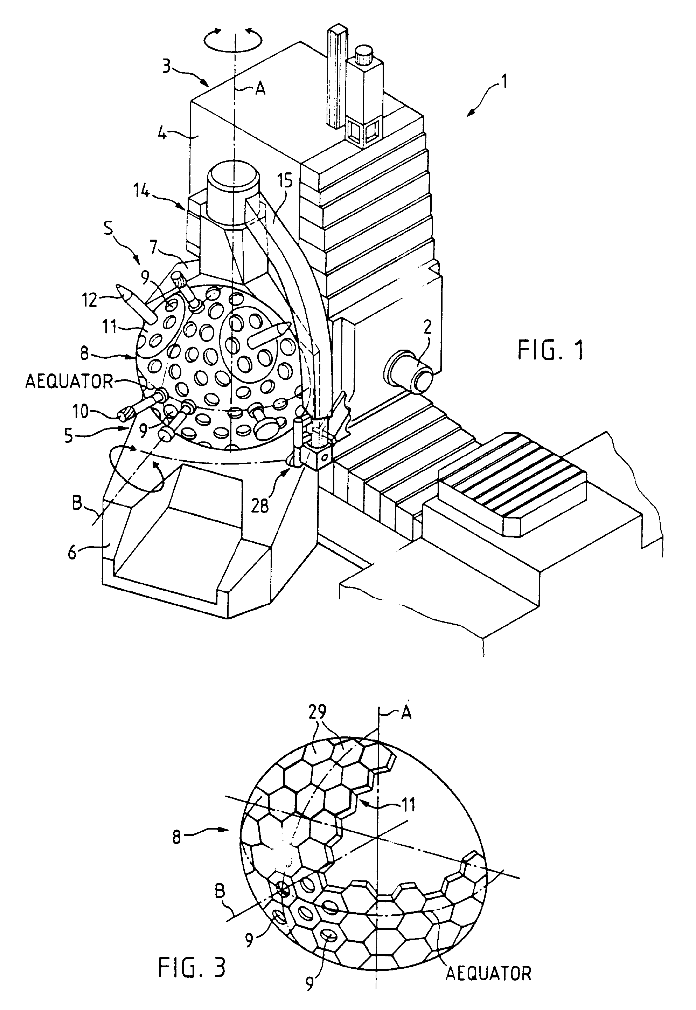

Die in Fig. 1 dargestellte Werkzeugmaschine, z. B. eine Horizontal-Fräs- und Bohrmaschine, weist eine horizontal gelagerte Arbeitsspindel 2 auf, die in einem Maschinenständer 3 höhenverstellbar gelagert ist. An einer Seitenwand 4 des Maschinenständers 3 ist ein Werkzeug-Speicher S mit einem Ständer 5, einem Fuss 6 und einem Tragrahmen 7 aufgestellt. Am Tragrahmen 7 ist ein Werkzeugträger 8 drehbar gelagert, welcher kugelkalottenförmig ausgebildet ist und an dessen Oberfläche in kompakter Anordnung Werkzeugaufnahmen 9 verteilt sind, in welche Werkzeuge 10 mit ihrem Halter eingesetzt werden können. Auf dem Werkzeugträger 8 können neben den einzelnen Werkzeugaufnahmen 9 auch Werkzeugmagazine 11 befestigt werden, auf denen mehrere Werkzeugaufnahmen 9 zu einer Einheit zusammengefasst sind. An jedem Werkzeugmagazin 11 ist ein Uebernahmedorn 12 zu seiner Handhabung vorgesehen.

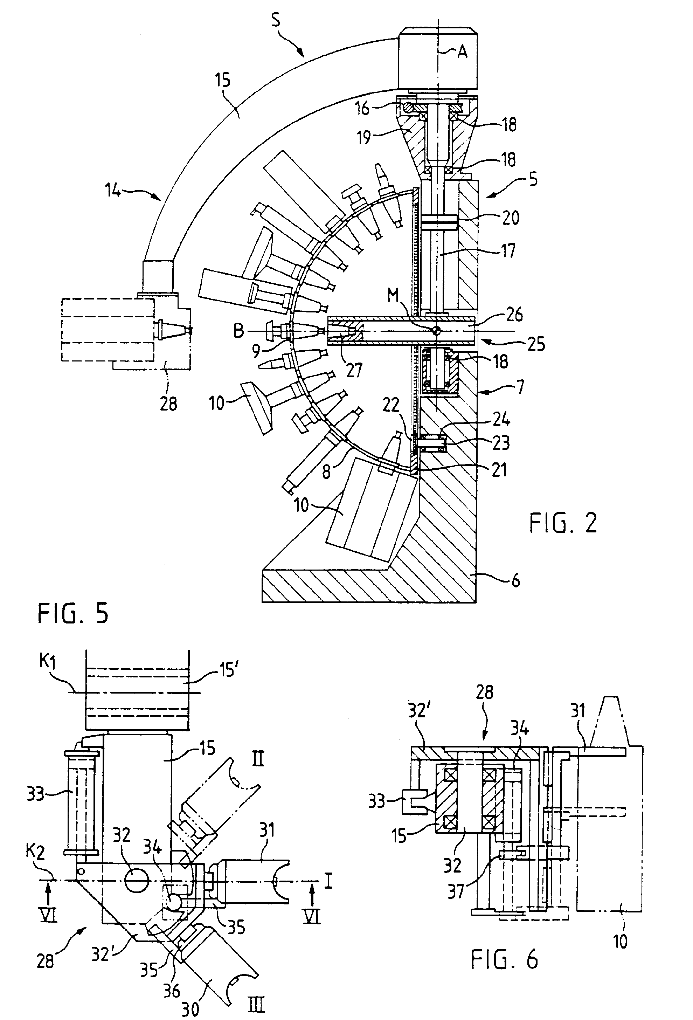

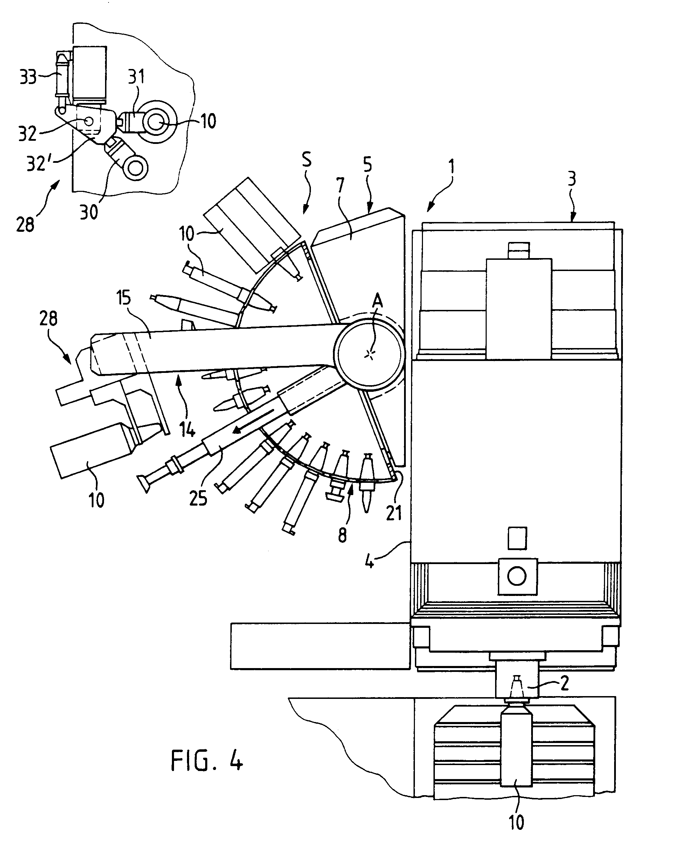

Am Tragrahmen 7 ist ein Werkzeugwechsler 14 mit einem Schwenkarm 15 um eine vertikale Achse A drehbar, während der Werkzeugträger 8 um eine horizontale Achse B drehbar ist. Beide Achsen A, B schneiden den Mittelpunkt M (Fig. 2) der kugelkalottenförmigen Schale. Bewegungen des Werkzeugwechslers 14 und einer Vorlegeeinheit 15 um die Achse A und des Werkzeugträgers 8 um die Achse B können wahlweise nacheinander, aber auch gleichzeitig ausgeführt werden.

Aus Fig. 2 ist der Aufbau des Speichers S im Detail ersichtlich. Der Schwenkarm 15 ist an einer vertikalen Schwenkwelle 17 befestigt, die mit Lagern 18 im Tragrahmen 7 und in einem, auf den Tragrahmen 7 aufgesetzten Ständerkopf 19 gelagert ist. Mit einer Schaltkupplung 20 kann der untere Teil der Schwenkwelle 17 vom obern Teil getrennt werden. Die vertikale Achse A der Schwenkwelle 17 schneidet den Mittelpunkt M einer Kugel, von welcher der kugelschalenförmige Werkzeugträger 8 eine Kalotte bildet. Der Werkzeugträger 8 wird tragrahmenseitig durch einen Lager- und Antriebsring 21 begrenzt, der als Innen- oder Aussenzahnkranz ausgebildet ist und auf in dem Tragrahmen 7 gelagerte Ritzel 22 drehbar gelagert ist. Die Ritzel 22 sind auf einer Welle 23 in Lagern 24 gelagert. Ein weiteres Ritzel steht mit einem nicht dargestellten, im Tragrahmen 7 untergebrachten Antrieb für die Rotation des Werkzeugträgers 8 um die horizontale Achse B in Antriebsverbindung. Die Lagerung kann auch in anderer Weise erfolgen, beispielsweise, dadurch, dass der Werkzeugträger 8 tragrahmenseitig auf einem einzigen, umfangseitig angeordneten Wälzlager gelagert ist.

Auf der Innenseite des schalenförmigen Werkzeugträgers 8 ist eine Vorlegeeinheit 25 eingebaut, welche in der Schwenkwelle 17 abgestützt ist. Die Vorlegeeinheit 25 setzt sich aus einer Verschiebeeinheit 26, z.B. einem Linearmotor, und einem Greifer 27 zusammen. Der Greifer 27 kann ein im Werkzeugträger 8 eingesetztes Werkzeug 10 von hinten am Konus festhalten und durch die Verschiebeeinheit 25 so weit vorschieben, dass es von einem am Schwenkarm 15 befestigten Werkzeug-Doppelgreifer 28 übernommen werden kann, wie noch im Detail erläutert wird. Der Greifer 27 ist in dem eingangs an zweiter Stelle beschriebenen Schutzrecht eingehend erläutert, weshalb auf eine nochmalige Darstellung verzichtet wird.

Durch gleichzeitiges Bewegen des Schwenkarmes 15 um die Achse A und des Werkzeugträgers 8 um die horizontale Achse B um den benötigten Winkelbetrag lässt sich jedes gewünschte Werkzeug in sehr kurzer Zeit vor der Vorlegeeinheit 25 positionieren. Die Vorlegeeinheit 25 greift das Werkzeug 10 von hinten, löst die Werkzeugarretierung und schiebt das Werkzeug linear heraus in die Uebergabeposition. Hier wird das Werkzeug von dem Werkzeugwechsler 28 erfasst und direkt anschliessend in die Arbeitsspindel 2 eingesetzt. Am ortsfesten Ständer 5 sind alle für das Vorlegen und Wechseln eines Werkzeuges in die Werkzeugspindel 2 notwendigen Komponenten angebaut und zueinander abgestimmt, wodurch eine genau vormontierte und justierte unabhängige Werkzeug-Versorgungseinheit mit Werkzeugspeicher S und Werkzeugwechsler 14 verwirklicht werden kann.

Auf den schalenförmigen Werkzeugträger 8 sind die Werkzeuge 10 in ihre Werkzeugaufnehmen 9 eingesetzt und arretiert, so dass sie auch bei schnellen Drehbewegungen des Werkzeugträgers nicht herausfallen können. Der Werkzeugträger 8 kann als eine aus Blech durch Drücken hergestellte kugelkalottenförmige Schale sein, in die nachträglich die Werkzeugaufnahmen 9 ausgeschnitten und mit passenden Einsätzen versehen werden. Die Schale kann auch in Leichtmetall gegossen sein, wobei die Werkzeugaufnahmen 9 eingearbeitet werden.

In Fig. 3 ist eine weitere Art der Herstellung des Werkzeugträgers 8 dargestellt. Die Schale wird aus einzelnen GFK (Glasfaserverstärkten Kunststoff)-Teilen Sechseck-Form zu einer selbsttragenden Konstruktion zusammengesetzt. Aus einigen solcher Teile kann ein Werkzeugmagazin 11 gebildet werden, siehe Fig. 1 und 3. Solche am Umfang des Werkzeugträgers 8 angeordnete, austauschbare Werkzeugmagazine dienen dem schnellen Werkzeug-Beladen und -Entladen in den Werkzeugspeicher und aus demselben. Das Zusammensetzen der Schale des Werkzeugträgers 8 aus einzelnen Teilen stellt eine sehr wirtschaftliche Lösung dar. Demgegenüber wäre die Herstellung der Schale als Einstückelement aus einem geeigneten Kunststoff nur wirtschaftlich, wenn solche Schalen in grosser Stückzahl hergestellt werden können.

In Fig. 4 ist die Werkzeugmaschine 1 und der Werkzeugspeicher S in der Draufsicht dargestellt. Der Ständer 5 weist einen keilförmigen Querschnitt auf, so das die horizontale Achse B zu der Achse der Maschinenspindel 2 geneigt ist. Dadurch wird der Schwenkweg des Schwenkarmes 15 verringert. Würde der Querschnitt des Ständers 5 rechteckig ausgeführt, würde die Achse B einen rechten Winkel zur Achse der Maschinenspindel 2 bilden, so dass der Weg des Werkzeug-Doppelgreifers 28 um diesen zusätzlichen Winkelbetrag, aber dazu noch um die Breite des Tragrahmens 7 grösser wird.

In Fig. 4 ist der Werkzeug-Doppelgreifer 28 in der Draufsicht und in der Nebenfigur in der Seitenansicht dargestellt. Er setzt sich aus zwei Schwenkgreifern 30, 31 zusammen, die um eine horizontale Achse 32 durch einen Linearmotor 33 in zwei Positionen schwenkbar sind. Zudem sind die Schwenkgreifer 30, 31 durch einen Linearmotor 34, z.B. einen Hubzylinder, in eine Vor- und eine Rücklage verschiebbar. Diese Schwenk- und Schiebewegungen sind aus Fig. 5 und 6 ersichtlich, in welchen der Werkzeug-Doppelgreifer 28 in vergrössertem Massstab dargestellt ist. An der Achse 32 ist eine Schwenkplatte 32' drehbar gelagert, an welcher der am Schwenkarm 15 abgestützte Linearmotor 33 angreift. An der Schwenkplatte 32' sind zwei Längsführungen 36 befestigt, auf denen die beiden Schwenkgreifer 30, 31 längsverschiebbar geführt sind. An den Schwenkgreifers 30, 31 ist ein Mitnahmefinger 35 befestigt, der in der Position I in den Bereich einer Schubplatte 37 des zweiten Linearmotors 34 ragt. Nur in der Position I, d.h. in der Uebernahme- und Uebergabeposition I 30, 31 vorgeschoben werden. Beim Schwenken des Schwenkgreifers 31 durch den Linearmotor 33 um die horizontale Achse 32 in die gestrichelte Lage 11 bewegt sich der Greifer 30 aus der Position III in die Position I, so dass jeder Schwenkgreifer 30, 31 in die Uebernahme- und Uebergabeposition I bewegt werden kann. In Fig. 6 befindet sich der Schwenkgreifer 31 in Position I in der Vorlage, die gleichzeitig Uebernahme- und Uebergabestellung ist. Durch den Linearmotor 34 kann der Schwenkgreifer 31 in die gestrichelte Lage zurückgeschoben werden. In Fig. 6 ist zudem das Werkzeug 10 gestrichelt angedeutet.

In Fig. 5 ist im Schwenkarm 15 gestrichelt eine Achse $K_1$ dargestellt. In dieser Achse liegt ein schematisch dargestelltes Gelenk mit einem Schwenkzapfen 15'. der untere Teil des Schwenkarmes 15 kann um die Achse $K_1$ um 90° geschwenkt werden. Mit dieser einfachen Ergänzung wird erreicht, dass mit dem Werkzeugspeicher S in gleicher Weise Werkzeugmaschinen mit senkrechter Werkzeugspindel bedient werden können. Der Werkzeugspeicher S bleibt hierbei in unveränderter Lage und erfährt keine weiteren Aenderungen. Der Vollständigkeit halber sei erwähnt, dass die Schwenkachse für die 90°-Schwenkung des unteren Teils des Schwenkarms 15 auch an anderer Stelle, z.B. an einer Achse $K_2$ im Bereich der Schwenkachse 32 der Schwenkgreifer 30, 31 angeordnet sei.

Der Werkzeugwechsel in die oder aus der Maschinenspindel 2 kann anhand von Fig. 4 erläutert werden. Der Schwenkarm 15 des Werkzeugwechslers 14 wartet mit dem gewünschten Werkzeug, das sich in einem der Schwenkgreifer 30, 31 befindet, in einer Warteposition in der Nähe der Maschinenspindel 2. Steht die Maschinenspindel 9 ausgerichtet in der Wechselposition, schwenkt der Schwenkarm 15 in die Wechselstellung ein. Die Bewegungen des Schwenkarmes 15 und der Schwenkgreifer 30, 31 sind zwangsläufig so koordiniert, dass der leere Werkzeuggreifer linear in das in der Spindel 2 befindliche Werkzeug 8 einfahren kann. Durch die Hubbwegung des Linearmotors 34 wird das benützte Werkzeug 8 aus der Maschinenspindel herausgezogen. Die Schwenkgreifer 30, 31 sind hierfür auf einer Längsführung verschiebbar gelagert und mit einem Mitnehmer 35 versehen, an dem in der Position I eine Schubplatte 37 des Linearmotors 34 angreift.

Nach dem Ausziehen des benützten Werkzeuges schwenken die Schwenkgreifer um 45°, um das neue Werkzeug vor der Spindel 2 zu positionieren. Durch den Hub des Linearmotors 34 wird das neue Werkzeug in die Spindel 2 eingesetzt. Hierauf zieht sich der Schwenkarm 15 durch Drehung um die Achse A in den Speicherbereich zurück. Der Schwenkarm 15 fährt hierbei auf die von der Steuerung neu gewünschte Position, um ein neues Werkzeug aus dem Speicher S zu entnehmen oder um das gebrauchte Werkzeug abzulegen.

Der beschriebene Ablauf des Werkzeugwechsels ist dank der kurzen Distanzen und einfachen Bewegungen sehr schnell.

Ein neu aufgerufenes Werkzeug ist durch die Rotationsbewegung des Werkzeugträgers 8 um die B-Achse schon auf den "Aequator" (in der Ebene der Positon I des Werkzeug-Doppelgreifers 28) gebracht worden. Dies kann schon während des Werkzeugwechsels an der Spindel 2 durchgeführt werden. Die Vorlegeeinheit 25 ergreift das gewünschte, jetzt vor ihr positionierte Werkzeug von hinten an der Konuspartie, löst die Werkzeug-Arretierung und schiebt das Werkzeug linear vor. Soll dagegen das Werkzeug abgelegt werden, wird die Vorlegeeinheit an einem lehren Speicherplatz hervorgeschoben und ist hier bereit, das Werkzeug zu übernehmen und anschliessend im Speicher zu deponieren.

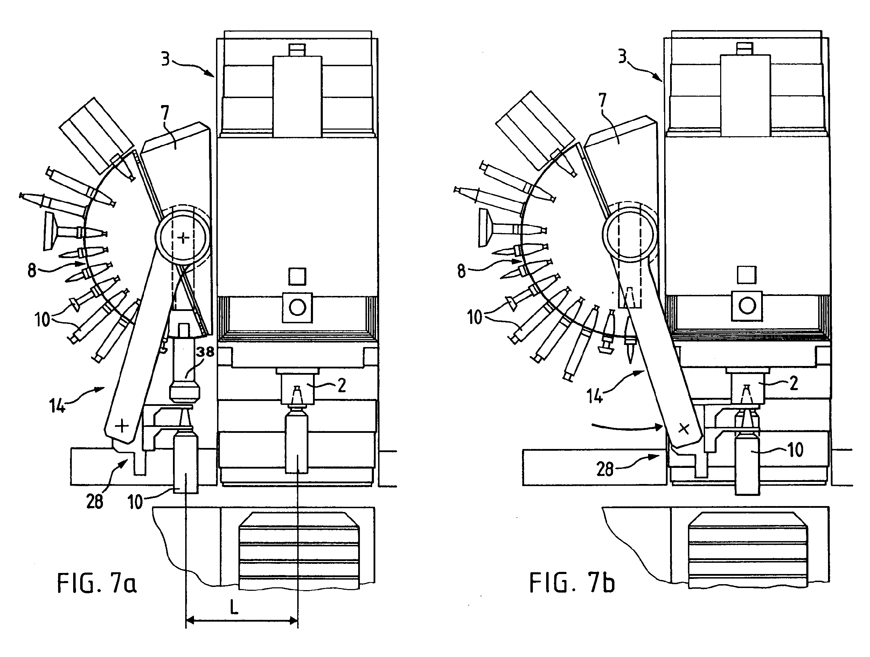

In ähnlicher Weise verläuft auch der Werkzeugwechsel in und aus dem Werkzeugmagazin. Die auf dem Werkzeugträger 8 deponierten Werkzeuge besitzen eine definierte Position. Wegen der Kugeloberfläche erreicht jedes Werkzeug durch die Rotation des Werkzeugträgers 8 den "Aequator"-Halbkreis. Dieser Halbkreis ist der geometrische Ort, wo die Werkzeuge für den Werkzeugwechsel entnommen oder übergeben werden. Hierbei ist es möglich, jedes Werkzeug sogar innerhalb des zur Spindel 2 näherliegenden "Aequator"-Viertelkreises zur Entnahme zu bringen. Vorteilhaft ist dazu, dass ca. 80 - 90 % aller im Speicher sich befindlichen Werkzeuge auf den ersten drei bis vier grössten Bahnen der Kalotte untergebracht sind. Aus diesem Grunde konzentrieren sich die häufigsten Wechselfrequenzen auf weniger als ein Viertelkreis. Dies erklärt die sehr kurzen Zeiten für die Werkzeugbereitstellung mit dem Werkzeugwechsler 14, wodurch entsprechend kurze Taktzeiten resultieren. Fig. 7a und 7b zeigen diesen Vorteil in anschaulicher Weise. In Fig. 7a befindet sich der Werkzeugwechsler 14 in seiner Wartestellung mit dem in die Arbeitsspindel 2 einzusetzenden Werkzeug 10. Der Pfeil L zeigt den Abstand des Werkzeuges 10 in der Wartestellung zu dem in der Arbeitsspindel 2 eingesetzten Werkzeug. Dieser Abstand beträgt nur wenig mehr als die halbe Maschinenbreite. Aus Fig. 7b ist die Lage des Werkzeugwechslers 14 beim Einsetzen des neuen Werkzeugs 10 in die Arbeitsspindel 2 ersichtlich.

Das gewünschte Werkzeug 10 wird durch die Vorlegeeinheit 25 dem Werkzeug-Doppelgreifer 28 vorgelegt und durch einen der Schwenkgreifer 30, 31 an der Flanschpartie erfasst. Gegebenenfalls müssen zuerst die Schwenkgreifer eine 45°-Bewegung ausführen. Durch die Bewegung des Linearmotors 34 wird das Werkzeug 10 aus dem Greifer 27 der Vorlegeeinheit 25 herausgezogen. Bevor das neue Werkzeug 10 zur Maschinenspindel gebracht werden kann, muss das gebrauchte Werkzeug zuerst noch abgelegt werden. Dies erfolgt durch Schwenken der Schwenkgreifer 30, 31 um die horizontale Achse 32, worauf der Linearmotor 34 das Werkzeug in den Greifer 27 der Vorlegeeinheit 25 schiebt, wo es arretiert wird. Der Schwenkarm 15 schwenkt nun um einen kleinen Winkelbetrag zurück und gibt den Raum frei, um das gebrauchte Werkzeug einzuziehen. Der Schwenkarm 15 fährt mit dem neuen Werkzeug in die Warteposition, wobei die Stellung der Schwenkgreifer 30, 31 zum Greifen des Werkzeuges aus der Spindel bereits vorbereitet ist. Es folgt nun durch den Aufruf der Maschinensteuerung der eigentliche Werkzeugwechsel in die Spindel 2, wie dies bereits vorstehend beschrieben wurde.

Zum Reinigen der Werkzeugkonen kann eine Werkzeugkonus-Reinigungsstation (WKR-Station) 38 im Werkzeugträger 8 untergebracht werden. Damit können je nach Bedarf die in die Spindel oder aus der Spindel kommenden Werkzeugkonen gereinigt werden.

Die Werkzeugkonusreinigung in der WKR-Station muss aus wirtschaftlichen Gründen parallel zu der Hauptzeit durchgeführt werden. Deshalb muss sie in den normalen Werkzeug-Wechselablauf integriert werden, ohne dass sie jedoch jedesmal ausgeführt werden müsste.

Wie aus Fig. 7a ersichtlich ist, wird zweckmässigerweise auf der Werkzeugträgerbahn mit dem grössten Durchmesser an einem Werkzeugspeicherplatz die WKR-Station 38 angebaut. Der Werkzeugwechsler 14 steht in den meisten Fällen in der Wechsel-Warteposition und wartet auf den eigentlichen Werkzeugwechsel-Befehl der Steuerung. Diese günstige Position wird nun für die Werkzeugkonus-Reinigung des angeforderten Werkzeuges benützt. Da die WKR-Station 38 bereits zeitparallel mit der vorhergehenden Schwenkarmbewegung auf die Stellung der Wechsel-Warteposition gebracht wurde, steht die WKR-Station 38 genau hinter dem Werkzeugkonus des im Schwenkgreifer wartenden Werkzeuges. Durch die Hubbewegung des Linearmotors 34 wird der Werkzeugkonus in die Reinigungsstation 38 gesteckt, ohne dass für den Werkzeugwechsel eine spezielle Reinigungsposition anzufahren wäre. Im Hinblick auf diese zeitsparende Reinigungsmöglichkeit kann eine Konusreinigung fest in den Werkzeugwechsel-Ablauf eingeplant und nur bei besonders kurzen Werkzeugwechselfolgen übersprungen werden.

Auch das Umorganisieren der Werkzeuge im Speicher, wie es in der Praxis erforderlich ist, kann schnell und vielseitig ausgeführt werden. Müssen Werkzeugmagazine mit mehreren Werkzeugaufnahmen ausgetauscht werden, wird ein Handhabungsgerät benützt, das sich des Uebernahmedornes 12 bedient. Die Vorlegeeinheit 25 schiebt hierbei das auszutauschende Magazin vor, wo es von einem Handhabungsgerät übernommen werden kann. Auch das Wiedereinsetzen eines Magazins erfolgt mittels des Handhabungsgerätes und der Vorlegeeinheit 25.

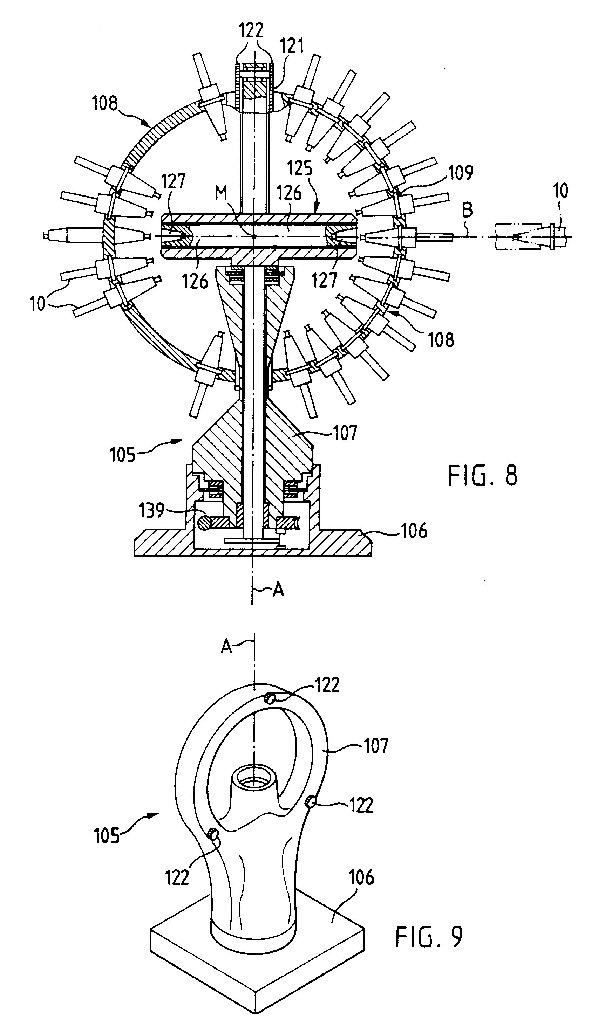

In Fig. 8 ist ein weiterer Werkzeugspeicher S, der im Gegensatz zum Werkzeugspeicher nach Fig. 1 und

EP 0 355 455 B1

2 einen Ständer 105 mit beidseits angeordneten, als Kugelkalotten ausgebildeten Werkzeugträgern 108 ausgerüstet ist. Die Werkzeugträger 108 sind gleich ausgebildet wie die Werkzeugträger 8 beim Werkzeugspeicher nach Fig. 1 und 2. Auch die radiale Anordnung der Werkzeuge 10 ist die gleiche wie beim Werkzeugträger 8. Die beiden Werkzeugträger 108 sind mit Ritzeln 122 am Tragrahmen 107 des Ständers 105 in gleicher Weise drehbar angeordnet wie der Werkzeugträger 8. Der Ständer 105 ist im Fuss 106 um die senkrechte Achse A drehbar, wobei für den Tragrahmen 107 im Speicherfuss 106 ein Antrieb 139 eingebaut ist.

Im Innern der beiden Werkzeugträger 108 ist die Vorlegeeinheit 125 gelagert, die ebenfalls um die vertikale Achse A schwenkbar ist. Im Gegensatz zur Vorlegeeinheit 25 weist die Vorlegeeinheit 125 zwei Verschiebeeinheiten 126 mit je einem Greifer 127 auf. Die Verschiebeeinheiten 126 bewegen sich in der Ebene der horizontalen Achse B.

In Fig. 9 ist der Ständer 105 allein dargestellt. Sein Tragrahmen 107 ist als schmaler Ring ausgebildet und weist beidseits die Ritzel 122 zur Lagerung der Werkzeugträger 108 auf.

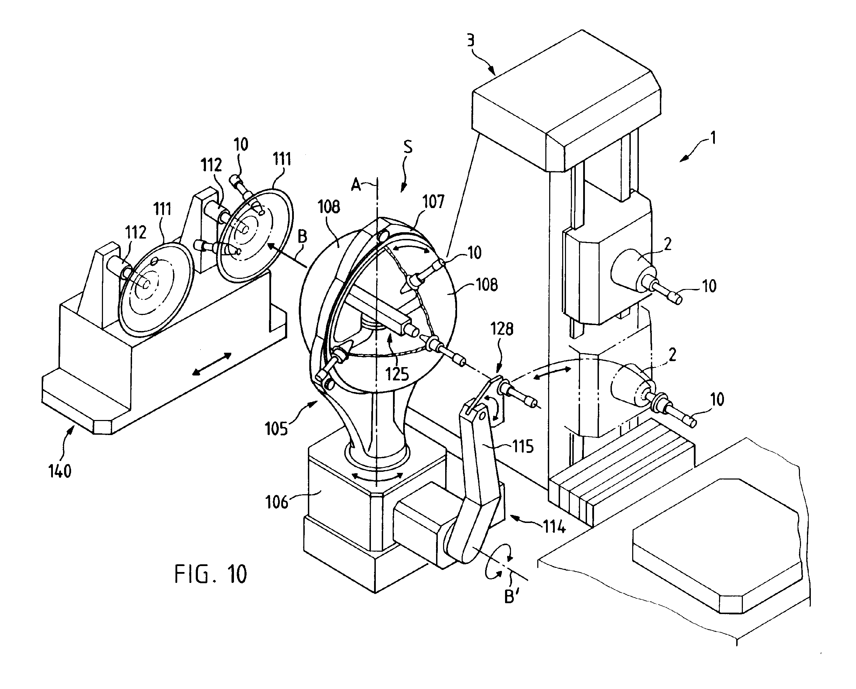

Der Speicher S nach Fig. 8 ist wie der Speicher S nach Fig. 1 und 2 als Konstruktion ausgebildet, welche die Werkzeugträger 108 und alle übrigen Komponenten trägt. Der Werkzeugwechsler 114, siehe Fig. 10, kann ebenfalls an dem Fuss 106 befestigt werden. Dadurch ist ebenfalls eine genau justierbare und autonome Werkzeug-Versorgungseinheit (Werkzeugspeicher und Werkzeugwechsler) verfügbar, die an verschiedene bekannte Werkzeugmaschinen und Bearbeitungszentren adaptierbar ist.

Die beiden Werkzeugträger 108 sind gleich ausgebildet wie beim Werkzeugspeicher nach Fig. 1 und 2. Es wird hierzu auf Fig. 3 und die dazugehörige Beschreibung verwiesen. Selbstverständlich kann der Werkzeugspeicher S nur mit einem Werkzeugträger betrieben werden. Es stehen dann entsprechend weniger Werkzeugaufnahmen 109 zur Verfügung.

Das lineare Hervorschieben der Werkzeuge 10 erfolgt in gleicher Weise wie beim Speicher nach Fig. 1 und 2 durch die Vorlegeeinheit 125. Bezüglich der Ausbildung der Vorlegeeinheit 125 wird auf den eingangs an zweiter Stelle beschriebenen Werkzeugspeicher der Anmelderin und die Beschreibung der Vorlegeeinheit 25 verwiesen. Auch in diesem Fall kann die Vorlegeeinheit 125 sich an einem Werkzeug 10 ankoppeln, ohne es vorzuschieben, wobei die Vorlegeeinheit abgekuppelt wird und mit dem Speicherständer 105 um die vertikale Achse A mitdrehen kann. Für die Uebergabe von Werkzeugen an den Werkzeugwechsler 114 ist die Vorlegeeinheit 125 jedoch starr positioniert und nur die Kugelkalotte macht ihre Bewegungen um sie herum. Dadurch kann jedes einzelne Werkzeug in irgendeiner Werkzeugaufnahme 109 dem Werkzeugwechsler 114 vorgelegt werden. In Fig. 8 ist ein solch vorgelegtes Werkzeug 10 am rechten Bildrand dargestellt.

Damit neben dem Austausch von Einzelwerkzeugen auch Werkzeuge gruppenweise ausgetauscht werden können, werden wie beim Werkzeugspeicher nach Fig. 1 und 2 Werkzeugmagazine 111 eingesetzt, siehe Fig. 10. Die Werkzeugmagazine 111 werden auf einem Transportmittel 140, z.B. einem Wagen oder Stapler, herangeführt und positioniert, damit das Werkzeugmagazin 111 von der Vorlegeeinheit übernommen und in den Werkzeugträger 108 eingesetzt werden kann.

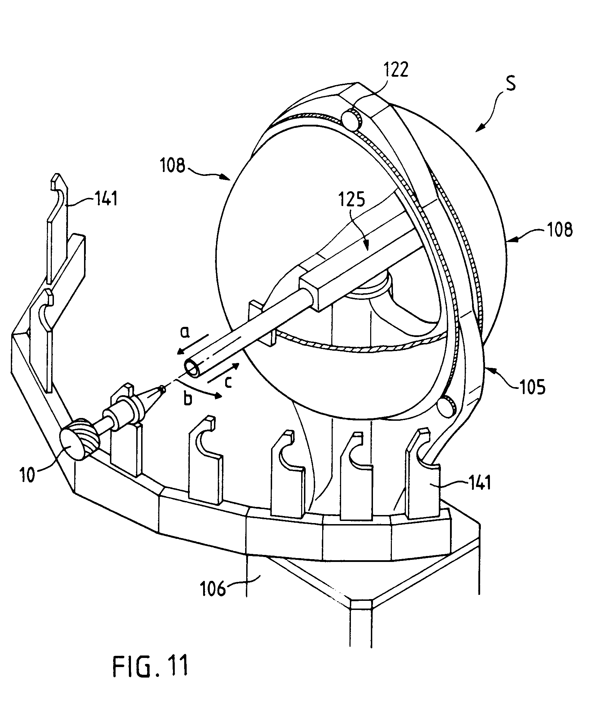

Zum Austausch von Einzelwerkzeugen können, siehe Fig. 11, um die senkrechte Achse A feststehende Rechen 141 für Einzelwerkzeugaufnahmen angeordnet werden. Der Bedienungsmann kann zum Wechseln bestimmte Werkzeuge in den Rechen legen, ohne in den Bewegungsablauf des Werkzeugspeichers S einzugreifen. Die Steuerung wählt den geeigneten Zeitpunkt für das Einladen bzw. Ausladen der Einzelwerkzeuge. Zu diesem Zweck wird die Vorlegeeinheit 125 in die entsprechende Position geführt. Das Werkzeug wird gefasst und entsprechend der Pfeile a, b, c, in den Speicher aufgenommen. Das Entladen eines Einzelwerkzeuges erfolgt in umgekehrter Reihenfolge.

An einem der Werkzeugträger 108 kann ebenfalls die Werkzeugkonusreinigung vorgesehen werden, wie dies bei der Beschreibung von Fig. 7 erläutert ist.

Der Werkzeugspeicher S nach Fig. 8 kann wie derjenige nach Fig. 1 und 2 als Direktspeicher eingesetzt werden. Auch hier ist der Hauptvortteil dieses Speichers die sehr schnelle Werkzeugbereitstellung und die grosse Werkzeugspeicherdichte. Fig. 10 zeigt den Einsatz des Werkzeugspeichers S als Direktspeicher. Hierzu ist im Fuss 106 ein Werkzeugwechsler 114 angeordnet, dessen Schwenkarm 115 einen Werkzeug-Doppelgreifer 128 trägt. Das Wechseln eines Werkzeuges aus der Werkzeugspindel 2 der Werkzeugmaschine 1 erfolgt in derselben Weise, wie dies bereits für den Werkzeugspeicher nach Fig. 1 und 2 beschrieben wurde.

Das folgende Beispiel mag dies veranschaulichen: Ein Werkzeugträger 8 mit einem maximalen Kalottendurchmesser von 1,3m kann bis zu 200 Werkzeuge mit Isokonus 50 aufnehmen. Bei Werkzeugen mit Werkzeugkonus 30 können bis zu 300 Werkzeuge im Werkzeugträger 8 gespeichert werden. Trotz der dichten, lückenlosen Anordnung der in Radialrichtung angeordneten Werkzeuge entstehen durch die doppelte Krümmung der Kalotte günstige geometrische Platzverhältnisse, die das Aufnehmen grosser Werkzeuge erlauben, ohne dass dadurch die benachbarten Werkzeugspeicherplätze verlorengehen. Auch der Transport einer mit Werkzeugen bestückten Kalotte lässt sich verhältnismässig einfach durchführen.

Der beschriebene Speicher weist somit erhebliche Vorteile gegenüber dem zylinderförmigen Speicher auf.

6

Zudem kombiniert er ein grosses Speichervolumen mit der Möglichkeit eines direkten Zugriffes vom Werkzeugträger 8 zur Arbeitsspindel 2 und zurück.

**Patentansprüche**

1. Werkzeugspeicher (S) für Werkzeugmaschinen, insbesondere für programmierbare Werkzeugmaschinen, zum Speichern, zur Entnahme und Rückgabe sowie zum Bereitstellen von Werkzeugen (10), in welchem die Werkzeuge einzeln und/oder gruppenweise mit senkrecht zur Speicheroberfläche ausgerichteten Werkzeuglängsachsen angeordnet sind, wobei die Werkzeuge durch eine Vorlegeeinheit (25, 125) greifbar sind und an einer Uebergabestelle von einem Werkzeug-Handhabungsgerät, insbesondere einem Werkzeugwechsler (28, 128) übernommen oder von diesem zurückgegeben werden, dadurch gekennzeichnet, dass in einem Ständer (5) ein mit Werkzeugaufnahmen (9) versehener Werkzeugträger (8, 108) in Form einer kugelkalottenförmigen Schale gelagert ist, welcher von einem im Ständer gelagerten Motor angetrieben und um eine, den Mittelpunkt (M) der kugelkalottenförmigen Schale schneidende horizontale Achse (B) rotierbar ist, wobei die Vorlegeeinheit (25, 125) im Innern der kugelkalottenförmigen Schale angeordnet ist.

2. Werkzeugspeicher nach Anspruch 1, dadurch gekennzeichnet, dass an dem Ständer (105) zwei die Werkzeuge (10) aufnehmende Werkzeugträger (108) in Form je einer kugelkalottenförmigen Schale auf beiden Seiten des Ständers drehbar angeordnet und um die horizontale Achse (B) rotierbar sind.

3. Werkzeugspeicher nach Anspruch 1 oder 2, dadurch gekennzeichnet, dass der Werkzeugträger (8, 108) an einem Tragrahmen (7, 107) des Ständers (5, 105) drehbar gelagert ist, der mit einem Fuss (6, 106) versehen ist.

4. Werkzeugspeicher nach Anspruch 1 oder 2, dadurch gekennzeichnet, dass die Vorlegeeinheit (25, 125) um eine den Mittelpunkt (M) der kugelkalottenförmigen Schale schneidende vertikale Achse (A) schwenkbar ist.

5. Werkzeugspeicher nach Anspruch 1 oder 2, dadurch gekennzeichnet, dass die Vorlegeeinheit (25) sich aus einem Verschiebearm (26, 126) z.B. einem Linearmotor, mit einem Werkzeuggreifer (27, 127) oder aus zwei entgegengesetzt gerichteten Verschiebearmen (126) mit einem Werkzeuggreifer (127) zusammensetzt.

6. Werkzeugspeicher nach Anspruch 1 oder 2, dadurch gekennzeichnet, dass die Vorlegeeinheit (25) an einer koaxial zu der vertikalen Achse (A) angeordneten Schwenkwelle (17) gelagert ist, die durch einen Schwenkantrieb (16) antreibbar ist, wobei in der Schwenkwelle (17) eine Schaltkupplung (20) zum Kuppeln und Entkuppeln der Vorlegeeinheit (25) eingebaut ist.

7. Werkzeugspeicher nach Anspruch 1, dadurch gekennzeichnet, dass der Werkzeugträger (8, 108) aus einzelnen polygonförmigen, z.B. viereck- oder sechseckförmigen, mit je einer Werkzeugaufnahme (9, 109) versehenen Werkzeugträger-Elementen (29) zu der kugelkalottenförmigen Schale zusammengesetzt ist.

8. Werkzeugspeicher nach Anspruch 1 oder 2, dadurch gekennzeichnet, dass der Werkzeugträger (8, 108) ständerseitig durch einen Zahnkranz (21, 121) begrenzt ist, der in an dem Ständer (5, 105) mit Abstand angeordneten, drehbar gelagerten Zahnritzeln (22, 122) zentriert und rotierbar ist.

9. Werkzeugspeicher nach Anspruch 7, dadurch gekennzeichnet, dass mehrere Werkzeugträger-Elemente (29) zu einem, zur Uebergabe an den Werkzeugträger (8, 108) geeigneten kugelkalottenförmigen Werkzeugmagazin (11, 111) zusammengefasst sind, das mit einem radial angeordneten Uebernahmedorn, (12, 112) versehen ist, mit welchem die Handhabung und die Uebergabe des Werkzeugmagazins an die Vorlegeeinheit (25, 125) bzw. die Rückgabe von derselben ermöglicht wird.

10. Werkzeugspeicher nach Anspruch 1, dadurch gekennzeichnet, dass mit dem Werkzeugspeicher (S) ein Werkzeugwechsler (14, 114) in Wirkungsverbindung steht, welcher an dem Ständer (5, 105) gelagert ist, sowie sich aus einem Schwenkarm (15, 115) und einem am Schwenkarmende gelagerten Werkzeug-Doppelgreifer (28, 128) zusammensetzt.

**11.** Werkzeugspeicher nach Anspruch 10, dadurch gekennzeichnet, dass der Schwenkarm (15, 115) des Werkzeugwechsler (14, 114) derart schwenkbar ist, dass der Werkzeug-Doppelgreifer (28, 128) sowohl die Werkzeugübergabe bzw. die Werkzeugübernahme an den Uebergabestellen von der Vorlegeeinheit (25, 125) zum Werkzeug-Doppelgreifer (28, 128) und zurück sowie von der Maschinenspindel (2) zum Werkzeug-Doppelgreifer (28, 128) und zurück ermöglicht.

**12.** Werkzeugspeicher nach Anspruch 10, dadurch gekennzeichnet, dass der Werkzeugwechsler (14) um die vertikale Achse (A) schwenkbar ist.

**13.** Werkzeugspeicher nach Anspruch 10, dadurch gekennzeichnet, dass der Werkzeugwechsler (114) um eine, am Fuss (106) des Ständers (105) vorgesehene horizontale Achse (B') schwenkbar ist.

**14.** Werkzeugspeicher nach Anspruch 1, dadurch gekennzeichnet, dass der Tragrahmen (7) einen keilförmigen Querschnitt aufweist, derart, dass die die horizontale Achse (B) bildende Drehachse des Werkzeugträgers (8) einen kleineren Winkel als 90º zur Achse der Maschinenspindel (2) bildet.

**15.** Werkzeugspeicher nach Anspruch 1, dadurch gekennzeichnet, dass in dem Werkzeugträger (8, 108) eine Werkzeugaufnahme (9) zur Befestigung einer Werkzeugkonus-Reinigungsstation (38), z.B. mit einem Reinigungsrotor, vorgesehen ist, welche durch den Werkzeugdoppelgreifer (28) des Werkzeugwechslers (14) bedienbar ist, derart, dass die Werkzeuge (10), z.B. während einer Wartezeit des Werkzeugwechslers (14, 114), durch den Werkzeugwechsler (14) in die Reinigungsstation (38) eingeführt und daraus entfernt werden.

**16.** Werkzeugspeicher nach Anspruch 1, dadurch gekennzeichnet, dass um den Werkzeugträger (8) Halter (141) zur Aufnahme eines Einzelwerkzeuges zentrisch zum Mittelpunkt (M) angeordnet sind, welche durch die Vorlegeeinheit (125) übernommen oder belegt werden.


## Claims

**1.** A tool magazine (S) for machine tools, in particular for programmable machine tools, for storing, removing and returning as well as for making available tools (10), in which the tools are arranged individually and or in groups with tool longitudinal axes aligned perpendicularly to the magazine surface, wherein the tools are able to be gripped by a presenting unit (25, 125) and are taken over at a transfer point by a tool handling apparatus, in particular a tool changer (28, 128) or given back by this, characterised in that in a stand (5) a tool carrier (8, 108) provided with tool holders (9) is mounted in the form of a spherical segment-shaped shell, which is driven by a motor mounted in the stand and is able to be rotated about a horizontal axis (B) cutting the central point (M) of the spherical segment-shaped shell, wherein the presenting unit (25, 125) is arranged in the interior of the spherical segment-shaped shell.

**2.** A tool magazine according to claim 1, characterised in that arranged rotatably on the stand (105) where are two tool carriers (108), receiving the tools (10), in the form in each case of a spherical segment-shaped shell, on both sides of the stand and are capable of being rotated about the horizontal axis (B).

**3.** A tool magazine according to claim 1 or 2, characterised in that the tool carrier (8, 108) is pivoted on a supporting frame (7, 107) of the stand (5, 105), which is provided with a base (6, 106).

**4.** A tool magazine according to claim 1 or 2, characterised in that the presenting unit (25, 125) is able to be pivoted about a vertical axis (A) cutting the central point (M) of spherical segment-shaped shell.

**5.** A tool magazine according to claim 1 or 2, characterised in that the presenting unit (25) is composed of a sliding arm (26, 126), e.g. a linear motor, with a tool gripper (27, 127) or of two sliding arms (126) opposingly directed with a tool gripper (127).

**6.** A tool magazine according to claim 1 or 2, characterised in that the presenting unit (25) is mounted on a pivot shaft (17) arranged coaxially to the vertical axis (A), which pivot shaft is able to be driven by a pivot drive (16), wherein inserted in the pivot shaft (17) there is a clutch (200) for coupling and decoupling the presenting unit (25).

7. A tool magazine according to claim 1, characterised in that the tool carrier (8,108) is composed of individual polygonal, e.g. square or hexagonal tool carrier elements (29) provided in each case with a tool holder (9, 109) to (form) the spherical segment-shaped shell.

8. A tool magazine according to claim 1 or 2, characterised in that the tool carrier (8, 108) is defined on the stand side by a toothed ring (21,12), which is centred in pinions (22,122) arranged spaced and pivoted on the stand (5, 105) and is capable of being rotated.

9. A tool magazine according to claim 7, characterised in that several tool carrier elements (29) are combined to form one spherical segment-shaped tool magazine (11, 111) suitable for transferring to the tool carrier (8, 108), which is provided with a radially arranged takeover spoke (12,112), with which the handling and transfer of the tool magazine onto the presenting unit (25,125) or the return of the same is made possible.

10. A tool magazine according to claim 1, characterised in that a tool changer (14,114) is operatively connected to the tool magazine (S) which is mounted on the stand (5, 105), as well as being composed of one pivot arm (15, 115) and a tool double gripper (28, 128) mounted on the pivot arm end.

11. A tool magazine according to claim 10, characterised in that the pivot arm (15, 115) of the tool changer (14, 114) is capable of being pivoted such that the tool double gripper (28, 128) enables the tool transfer or the tool takeover at the transfer points from the presenting unit (25, 125) to the tool double gripper (28, 128) and back as well as from the machine spindle (2) to the tool double gripper (28, 128) and back.

12. A tool magazine according to claim 10, characterised in that the tool changer (14) is able to be pivoted about the vertical axis (A).

13. A tool magazine according to claim 10, characterised in that the tool changer (114) is able to be pivoted about a horizonal axis (B′) at the base (106) of the stand (105).

14. A tool magazine according to claim 1, characterised in that the supporting frame (7) has a wedged cross-section, such that the rotary axis of the tool carrier (8) forming the horizontal axis (B) forms an angle relative to the axis of the machine spindle (2) smaller than 90°.

15. A tool magazine according to claim 1, characterised in that in the tool carrier (8, 108) there is provided a tool holder (9) for securing a tool cone cleaning station (38), e.g. with a cleaning rotor, which is capable of being operated through the tool double gripper (28) of the tool changer (14), such that the tools (10), e.g. during a waiting period of the tool changer (14, 114), ace introduced into and removed from the cleaning station (38) by the tool changer (14).

16. A tool magazine according to claim 1, characterised in that holders (141) for receiving an individual tool are arranged around the tool carrier (8) Centrally relative to the Central point (M), which holders are taken over or returned by the presenting unit (125).

## Revendications

1. Stockeur d'outils (S) pour machines-outils, notamment pour machines-outils programmables, pour le stockage, le prélèvement et la restitution ainsi que pour la préparation d'outils (10), dans lequel les outils sont placés séparément et/ou groupés avec leurs axes longitudinaux dirigés perpendiculairement à la surface du stockeur, dans lequel les outils peuvent être saisis par une unité de présentation (25, 125) et sont repris à un point de transfert, par un manipulateur d'outil, en particulier un changeur d'outils (28, 128), où sont restitués par celui-ci, caractérisé en ce qu'un support d'outils (8, 108), doté de logements d'outils (9), en forme de bac en calotte sphérique, est monté dans un montant (5), lequel support d'outils est entraîné par un moteur monté dans le montant et peut tourner autour d'un axe horizontal (B), passant par le centre (M) du bac en forme de calotte sphérique, l'unité de présentation (25, 125) étant placée à l'intérieur du bac en forme de calotte sphérique.

2. Stockeur d'outils selon la revendication 1, caractérisé en ce que deux supports d'outils (108), se présentant chacun sous la forme d'un bac en calotte sphérique, logeant les outils (10), sont montés tournant de part et d'autre du montant (105) et peuvent tourner autour de l'axe horizontal (B).

**3.** Stockeur d'outils selon la revendication 1 ou 2, caractérisé en ce que le support d'outils (8, 108) est monté tournant sur un cadre de support (7, 107) du montant (5, 105), lequel est doté d'un pied (6, 106).

**4.** Stockeur d'outils selon la revendication 1 ou 2, caractérisé en ce que l'unité de présentation (25, 125) peut pivoter autour d'un axe vertical (A) passant par le centre (M) du bac en forme de calotte sphérique.

**5.** Stockeur d'outils selon la revendication 1 ou 2, caractérisé en ce que l'unité de présentation (25) se compose d'un bras de déplacement (26, 126), par exemple d'un moteur linéaire avec une pince d'outils (27, 127) ou de deux bras de déplacement (126), dirigés en sens contraire, avec une pince d'outils (127).

**6.** Stockeur d'outils selon la revendication 1 ou 2, caractérisé en ce que l'unité de présentation (25) est montée sur un arbre de pivotement (17), coaxial à l'axe vertical (A) et qui peut être entraîné par un mécanisme d'entraînement en pivotement (16), un accouplement de manoeuvre (20) pour l'accouplement et le désaccouplement de l'unité de présentation (25) étant monté dans l'arbre de pivotement (17).

**7.** Stockeur d'outils selon la revendication 1, caractérisé en ce que le support d'outils (8, 108) est constitué de différents éléments de support d'outils (29) polygonaux, par exemple rectangulaires ou hexagonaux, dotés chacun d'un logement d'outils (9, 109), formant le bac en forme de calotte sphérique.

**8.** Stockeur d'outils selon la revendication 1 ou 2, caractérisé en ce que le support d'outils (8, 108) est limité, côté montant, par une couronne dentée (21, 121) qui est centrée et peut tourner dans des pignons dentés (22, 122) montés tournants, à une certaine distance du montant (5, 105).

**9.** Stockeur d'outils selon la revendication 7, caractérisé en ce que plusieurs éléments (29) du support d'outils sont regroupés pour former un magasin d'outils (11, 111) en forme de calotte sphérique, approprié au transfert vers le support d'outils (8, 108), lequel magasin est doté d'un mandrin de transfert (12, 112) placé radialement, permettant la manipulation et le transfert du magasin d'outils à l'unité de présentation (25, 125) ou la restitution de celui-ci.

**10.** Stockeur d'outils selon la revendication 1, caractérisé en ce qu'un changeur d'outils (14, 114) qui est monté sur le montant (5, 105) et qui se compose d'un bras de pivotement (15, 115) ainsi que d'une double pince d'outils (28, 128), montée à l'extrémité du bras de pivotement, est en liaison active avec le stockeur d'outils (S).

**11.** Stockeur d'outils selon la revendication 10, caractérisé en ce que le bras de pivotement (15, 115) du changeur d'outils (14, 114) peut pivoter de manière que la double pince d'outils (28, 128) permette le transfert ou la restitution d'outils aux points de transfert, de l'unité de présentation (25, 125) à la double pince d'outils (28, 128) et en retour ainsi que de la broche de machine (2) à la double pince d'outils (28, 128) et en retour.

**12.** Stockeur d'outils selon la revendication 10, caractérisé en ce que le changeur d'outils (14) peut pivoter autour de l'axe vertical (A).

**13.** Stockeur d'outils selon la revendication 10, caractérisé en ce que le changeur d'outils (114) peut pivoter autour d'un axe horizontal (B'), prévu au pied (106) du montant (105).

**14.** Stockeur d'outils selon la revendication 1, caractérisé en ce que le cadre de support (7) présente une section transversale conique telle que l'axe de rotation du support d'outils (8) fait avec l'axe horizontal (B), un angle inférieur à 90° par rapport à l'axe de la broche de machine (2).

**15.** Stockeur d'outils selon la revendication 1, caractérisé en ce qu'il est prévu dans le support d'outils (8, 108), un logement d'outils (9) pour la fixation d'un poste de nettoyage(38) du cône d'outils, par exemple avec un rotor de nettoyage, lequel poste peut être desservi par la double pince d'outils (28) du changeur d'outils (14), de telle sorte que les outils (10) soient par exemple, introduits dans le poste de nettoyage (38) et en soient prélevés, par le changeur d'outils (14), pendant un temps d'attente du changeur d'outils (14, 114).

**16.** Stockeur d'outils selon la revendication 1, caractérisé en ce qu'il est prévu autour du support d'outils (8), des dispositifs de maintien (141) destinés à loger un outil unique, de manière centrée par rapport au point milieu (M), lequel outil est repris ou déposé par l'unité de présentation (125).

FIG. 1

FIG. 3

FIG. 2

FIG. 5

FIG. 6

FIG. 4

FIG. 7b

FIG. 7a

14

FIG. 8

FIG. 9

15

FIG. 10

EP 0 355 455 B1

FIG. 11